# EUROPÄISCHE PATENTSCHRIFT

(11) **EP 2 601 072 B1**
(45) Veröffentlichungstag und Bekanntmachung des Hinweises auf die Patenterteilung: **20.05.2015**
(21) Anmeldenummer: 11743189.0
(22) Anmeldetag: 20.07.2011
(51) Int. Cl.: B60M 1/20, B60M 1/24, B60M 1/30

(54) **STROMSCHIENENANORDNUNG**
POWER RAIL ARRANGEMENT
ENSEMBLE RAIL CONDUCTEUR

(30) Priorität: 05.08.2010 DE 102010033451
(43) Veröffentlichungstag der Anmeldung: 12.06.2013
(73) Patentinhaber: Furrer + Frey AG, 3000 Bern 6 (CH)
(72) Erfinder: FURRER, Beat, CH-3012 Bern (CH); GILGEN, Marc, CH-3006 Bern (CH)
(74) Vertreter: von Bülow, Tam
(86) Internationale Anmeldenummer: PCT/EP2011/003633
(87) Internationale Veröffentlichungsnummer: WO 2012/016640

(56) Entgegenhaltungen:
- WO-A1-2006/100267
- DE-A1- 2 046 740
- DE-C- 565 331

## Beschreibung

Die Erfindung bezieht sich auf eine Stromschienenanordnung gemäß dem Oberbegriff des Patentanspruches 1.

Eine solche Stromschienenanordnung ist aus der WO 2006/100267 A1 bekannt. Dort ist eine starre Stromschiene zur Speisung von elektrischen Triebfahrzeugen durch ein Halteteil an einem Tragwerk befestigbar, wobei das Halteteil formschlüssig mit einem Gleitelement koppelbar ist, das in Längsrichtung der Stromschiene verschieblich ist. Das Halteteil, das Gleitelement und eine Basisplatte des Tragwerkes sind durch Gewindeschrauben miteinander verbunden.

Die DE 20 46 740 A1 zeigt eine Stromschienenanordnung zur Speisung von elektrischen Triebfahrzeugen mit einer starren Stromschiene, die durch eine Halteteil an einem Tragwerk befestigbar ist, wobei das Halteteil formschlüssig mit einem Gleitelement koppelbar ist, das in Längsrichtung der Stromschiene verschieblich ist, wobei die Stromschiene in Ausnehmungen des Halteteils und des Gleitelementes gehalten ist.

Die DE 565 331 C zeigt eine Stromschienenanordnung zur Speisung von elektrischen Triebfahrzeugen, die durch ein Halteteil an einem Tragwerk befestigbar ist, wobei das Halteteil formschlüssig mit einem Gleitelement koppelbar ist, das in Längsrichtung der Stromschiene verschieblich ist, wobei die Stromschiene in Ausnehmungen des Halteteils und des Gleitelementes gehalten ist.

Die DE 20 2009 013 786 U1 zeigt eine Stromschiene, die über Anschlussplatten und federelastische, gelenkige Höhenverstellungen mit ortsfesten Tragwerken verbunden ist. Die Tragwerke sind normalerweise in gleichmäßigen Abständen längs des Verlaufes der Stromschiene angeordnet.

Zur Justierung der Lage der Stromschiene gegenüber einer Fahrebene ist die Verbindung zwischen der Stromschiene und dem Tragwerk höhenverstellbar. Höhenverstellbare Stromschienenhaltevorrichtungen sind auch aus der DE 20 2004 009 416 U1 bekannt.

Bei den bekannten Stromschienenanordnungen wir die Stromschiene an einer Höhenverstelleinrichtung mittels Haltewinkeln und Schrauben befestigt, wobei die Haltewinkel seitlich auskragende Arme der Stromschiene übergreifen und die Schrauben beidseitig der Stromschiene an einer Halteplatte mit einer Gegenmutter verschraubt werden.

Das Anschrauben der Stromschiene ist arbeitsaufwendig, fordert den Einsatz von Werkzeugen und verlangt zusätzlich, daß die Schrauben durch Sicherungsbleche oder sonstige Maßnahmen gegen unfreiwilliges Lösen gesichert werden. Da die Stromschienen und die Höhenverstelleinrichtungen durch vorbeifahrende Fahrzeuge und Windkräfte Schwingungen ausgesetzt sind, sind solche Sicherungsmaßnahmen gegen das Öffnen der Schrauben notwendig.

Aufgabe der Erfindung ist es, die Stromschienenanordnung der eingangs genannten Art dahingehend zu verbesserin, daß die Verbindung zwischen einer Stromschiene und einem diese haltenden Tragwerk und insbesondere einer Höhenverstelleinrichtung einfacher zu montieren ist und trotzdem die Stromschiene sicher hält, wenn sie Schwingungen unterworfen ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Grundidee der Erfindung ist es, ein Halteteil für die Stromschiene mit einem Gleitelement zu versehen, das in das Halteteil einschiebbar ist und mit diesem eine formschlüssige Verbindung eingeht. Durch ein federelastisches Druckelement ist die relative Lage zwischen Halteteil und Gleitelement fixierbar. Die Stromschiene wird dabei auf einer Seite in einer Ausnehmung des Halteteiles und auf der anderen Seite einer Ausnehmung des Gleitelementes gehalten.

Vorzugsweise ist die formschlüssige Verbindung zwischen Halteteil und Gleitelement eine Schwalbenschwanzführung.

Weiter vorzugsweise ist das federelastische Druckelement in einer Sacklochbohrung des Halteteils angeordnet und ragt mit einem kugelkalottenförmigen Vorsprung aus dem Halteteil heraus, wobei dieser Vorsprung in eine angepaßte Bohrung des Gleitelementes eingreift und damit die relative Läge zwischen Halteteil und Gleitelement fixiert.

Im folgenden wird die Erfindung anhand eines Ausführungsbeispieles im Zusammenhang mit der Zeichnung ausführlicher erläutert. Es zeigt:
- Fig. 1: eine Seitenansicht eines Tragwerkes einer Stromschienenanordnung gesehen in Längsrichtung der Stromschiene nach einem Ausführungsbeispiel der Erfindung;
- Fig. 2: eine teilweise geschnittene Ansicht einer Höhenverstelleinrichtung mit Halteteil und Gleitelement nach der Erfindung;
- Fig. 3: einen Querschnitt durch das Halteteil, das Gleitelement und das Druckelement in Explosionsdarstellung;
- Fig. 4: eine Seitenansicht des Druckelementes;
- Fig. 5: eine Stirnansicht des Druckelementes;
- Fig. 6: eine perspektivische Ansicht des Druckelementes; und
- Fig. 7: eine perspektivische Ansicht einer Höhenverstelleinrichtung mit Halteteil und Gleitelement.

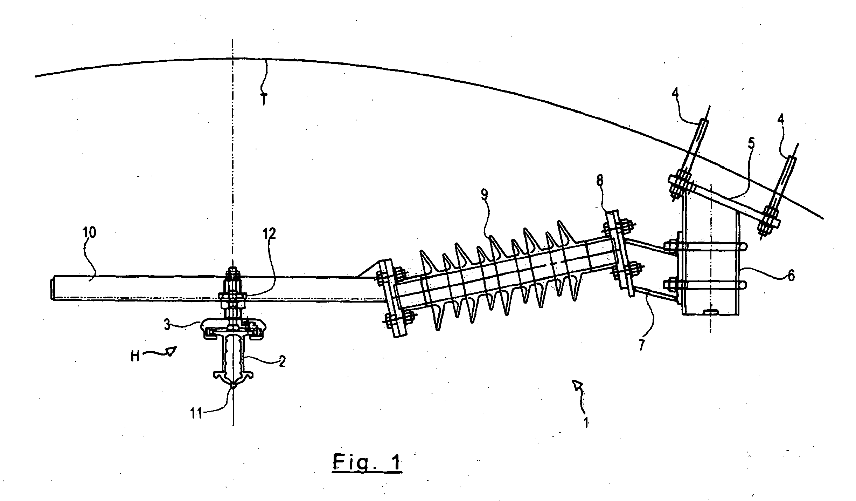

Fig. 1 zeigt eine Ansicht eines Tragwerkes 1, an dem die Stromschiene 2 über einer Höhenverstelleinrichtung H befestigt ist. Das Tragwerk 1 ist hier an einer Tunnelwand T mit Dübeln 4 befestigt, die über eine Rohrplatte 5 ein Tragrohr 6 halten. Am Tragrohr 6 ist über ein Schwenkgelenk 7 ein erster Träger 8 befestigt, der über einen Isolator 9 mit einem zweiten Träger 10 verbunden ist, an welchem die Höhenverstelleinrichtung H mit einer Tragplatte 12 angeschraubt ist.

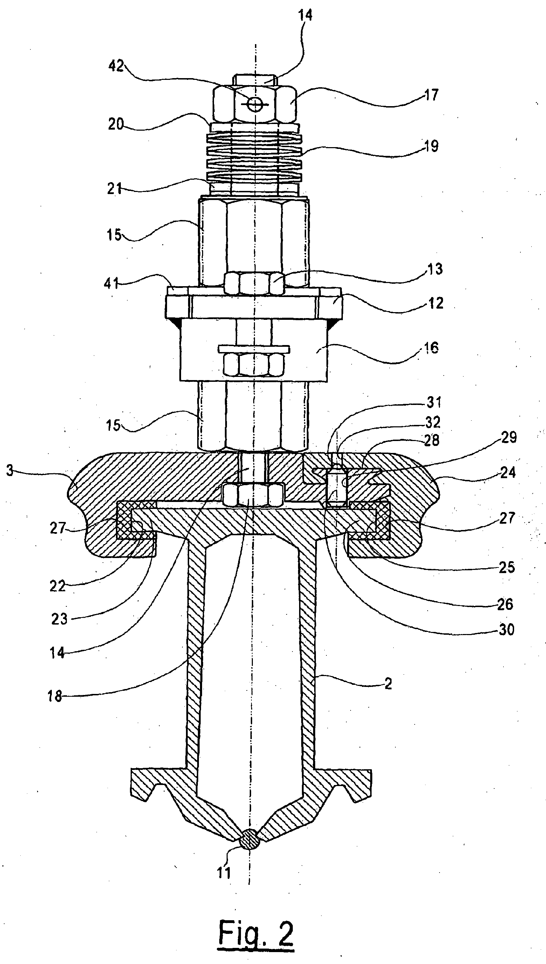

Fig. 2 zeigt detaillierter die Höhenverstelleinrichtung H und die Stromschiene 2, die in bekannter Weise einen Fahrdraht 11 einspannt.

Die Höhenverstelleinrichtung H hat eine Tragplatte 12, mit der sie an dem Träger 10 (Fig. 1) befestigt wird und zwar über Schrauben 13. Ein durchgehender Dorn 14 ragt durch eine erste Hülse 15 hindurch sowie durch die Tragplatte 12 und eine zweite Hülse 16, die fest mit der Tragplatte 12 verbunden ist, beispielsweise angeschweißt. Die erste Hülse 15 hat ein Außengewinde, das in ein Innengewinde der zweiten Hülse 16 einschraubbar ist, wobei das Außengewinde sich nur über einen Teil der ersten Hülse 15 erstrecken kann, die zumindest an ihrem oberen, der Stromschiene 1 abgewandten Ende einen Sechskantkopf trägt.

Die erste Hülse 15 hat eine mittige Durchgangsbohrung, in die der zylindrische Dorn 14 einsetzbar ist. Der Dorn 14 hat an seinem oberen und seinem unteren Ende jeweils ein Außengewinde, auf das jeweils eine Mutter 17 bzw. 18 aufschraubbar ist, wobei zweckmäßigerweise beide Muttern durch Sicherungsstifte in Drehrichtung fixiert werden können. Zwischen der Oberseite der ersten Hülse 15 und der Unterseite der Mutter 17 kann ein Federpaket 19 angeordnet sein, bei dem es sich beispielsweise um ein Paket aus mehreren Tellerfedern handelt. Das Federpaket 19 ist zwischen zwei Ringscheiben 20 und 21 abgestützt. Der Dorn 14 ist um seine Längsachse drehbar gelagert.

Durch Verdrehen der ersten Hülse 15 gegenüber der zweiten Hülse 16 kann die Höhenlage des Halteteils 3 und damit die der Stromschiene 2 relativ zur Tragplatte 12 verändert werden. Der Dorn 14 ragt nämlich mit seinem unteren, der Stromschiene 2 zugewandten Ende durch das Halteteil 3 hindurch, das durch die Mutter 18 an dem Dorn 14 gehalten ist. Somit kann die relative Höhenlage zwischen dem Halteteil 3 und der Halteplatte 12 eingestellt werden.

Am Halteteil 3 wird die Stromschiene 2 mit dem eingeklemmten Fahrdraht 11 in folgender Weise befestigt.

Das Halteteil 3 hat in der Querschnittsansicht der Fig. 2 eine Ausnehmung 22, in die ein erster seitlicher Arm 23 der Stromschiene 2 eingreift.

Auf der anderen Seite ist ein Gleitelement 24 mit einer entsprechenden Ausnehmung 25 vorgesehen, in die ein entsprechender seitlicher Arm 26 der Stromschiene 2 eingreift.

Zwischen den Ausnehmungen 22 und 25 und den entsprechenden Armen 23 und 26 der Stromschiene 2 kann eine Kunststoffeinlage 27 angeordnet sein, die die Stromschiene 2 elektrisch gegenüber dem Halteteil 3 bzw. dem Gleitelement 24 und damit auch gegenüber der Höhenverstelleinrichtung H isoliert. Es sei jedoch angemerkt, daß auch Anordnungen möglich sind, bei denen die gesamte Höhenverstelleinrichtung H mit Versorgungsspannung verbunden ist und die Stromzuführung zur Stromschiene 2 über die Höhenverstelleinrichtung H erfolgt.

Das Gleitelement 24 ist in Längsrichtung der Stromschiene 2 und des Fahrdrahtes 11 relativ zum Halteteil 3 verschieblich und zwar über eine Schwalbenschwanzführung 28. Im konkreten Ausführungsbeispiel ist am Halteteil 3 ein schwalbenschwanzförmiger Vorsprung und am Gleitelement 4 eine daran angepaßte schwalbenschwanzförmige Ausnehmung vorgesehen. Damit ist das Gleitelement 24 nur in Längsrichtung der Stromschiene 2 gegenüber dem Halteteil 3 verschieblich, jedoch in allen anderen Richtungen formschlüssig gehalten.

Im Halteteil 3 ist im Bereich des schwalbenschwanzförmigen Vorsprunges ein Sackloch 29 vorgesehen, in das ein federelastisches Druckelement 30 eingesetzt ist. Das Sackloch ist nach oben (bezogen auf die normale Einbaulage) in Richtung zum Gleitelement 24 hin offen und nach unten in Richtung zum Stromschiene 11 hin geschlossen, so daß das Druckelement 30 dort gehalten ist. Das Druckelement 30 hat an seinem oberen Ende einen kugelkalottenförmigen Vorsprung 31, der aus der Sacklochbohrung 29 über die Oberseite des schwalbenschwanzförmigen Vorsprunges des Halteteils 3 hinausragt und in eine Bohrung 32 des Gleitelementes 24 eingreift, wenn die Bohrung 32 aufgrund der relativen Lage des Gleitelementes 24 zum Halteteil 3 dem Vorsprung 31 gegenüberliegt. Somit rastet in der korrekten Montagestellung der Vorsprung 31 in die Bohrung 32 ein, wodurch das Gleitelement 24 gegenüber dem Halteteil 3 fixiert wird.

Die Montage der Stromschiene 2 an dem Halteteil 3 ist somit sehr einfach. Wenn die Höhenverstelleinrichtung H mit Halteteil 3 am Tragwerk 1 befestigt ist, wird die Stromschiene 11 zunächst mit dem Arm 23 in die Ausnehmung 22 eingesetzt. Sodann wird das Gleitelement 24 mit der Ausnehmung 25 quer zur Längsrichtung der Stromschiene 11 auf diese aufgeschoben und dann in Längsrichtung der Stromschiene 2 über die Schwalbenschwanzführung verschoben, bis das Druckelement 30 in die Bohrung 32 einrastet.

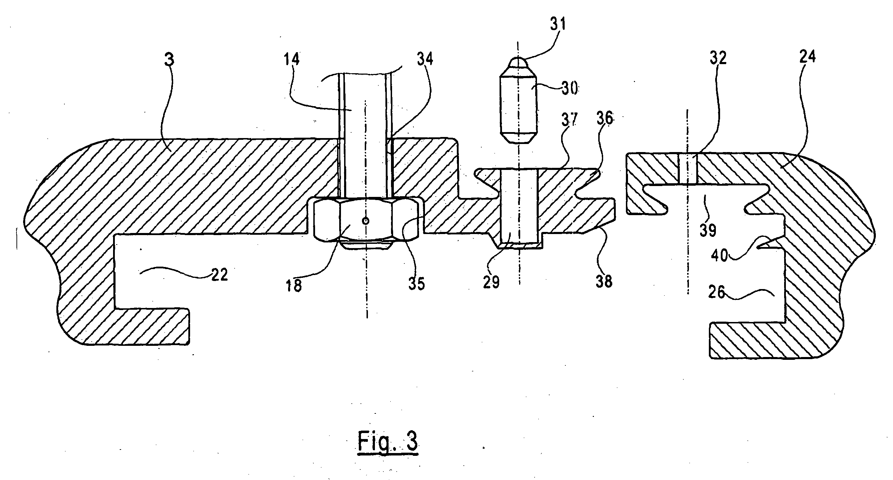

Fig. 3 zeigt in einer Explosionsdarstellung das Halteelement 3, das Gleitelement 24 und das Druckelement 30, wobei der Dorn 14 und die Mutter 18 angedeutet sind. Das Halteteil 3 hat die C-förmige Ausnehmung 22, in die ein Arm der Stromschiene 2 eingreift. Das Halteteil hat eine zentrale Bohrung 34, durch die der Dorn 14 hindurchragt sowie anschließend an die Bohrung 34 eine verbreiterte Ausnehmung 35 zur Aufnahme der Mutter 18.

An der der Ausnehmung 22 gegenüberliegenden Seite hat das Halteteil 3 einen schwalbenschwanzförmigen Vorsprung 36 mit einer nach oben hin offenen Sacklochbohrung 29, in die das federelastische Druckelement 30 eingesetzt wird. Die Länge der Sacklochbohrung 29 und des Druckelementes 30 sind so abgestimmt, daß der kugelkalottenförmige Vorsprung 31 des Druckelementes 30 aus der Oberfläche 37 des schwalbenschwanzförmigen Vorsprunges 36 herausragt. Weiter hat das Halteteil an der Seite des schwalbenschwanzförmigen Vorsprunges 36 eine Abschrägung 38, deren Fläche nach unten, d.h. in Richtung zur Stromschiene, hinweist.

Das Gleitelement 24 hat eine an den schwalbenschwanzförmigen Vorsprung 36 angepaßte schwalbenschwanzförmige Ausnehmung 39 sowie eine Durchgangsbohrung 32, die im montierten Zustand des Gleitelementes 24 an dem Halteteil 3 mit der Sacklochbohrung 29 ausgerichtet ist, so daß der kugelkalottenförmige Vorsprung 31 des Druckelementes 30 in diese Bohrung 32 eingreift. Weiter hat das Gleitelement 24 einen abgeschrägten Vorsprung 40, der an die Abschrägung 38 angepaßt ist und bei an das Halteteil 3 montiertem Gleitelement 24 an der Abschrägung 38 anliegt.

Somit ist das Gleitelement 24 formschlüssig an dem Halteteil 3 befestigbar und kann nur in Längsrichtung der Stromschiene verschoben werden, wobei durch das Zusammenwirken des Druckelementes 30 mit der Bohrung 32 eine definierte Position fixierbar ist.

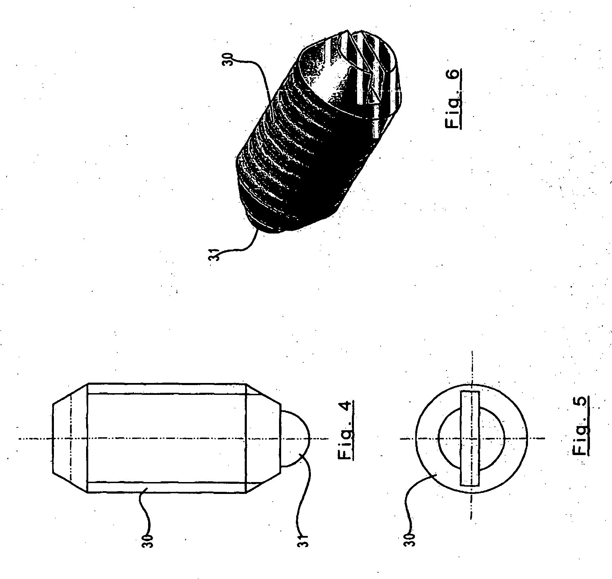

Die Fig. 4 bis 6 zeigen das Druckelement 30 mit dem Vorsprung 31, der hier die Form einer Kugelkalotte hat. Dem Fachmann ist klar, daß auch andere Formen denkbar sind, wie z.B. ein Pyramidenstumpf. Die Form ist lediglich so zu wählen, daß beim Aufschieben des Gleitelementes 24 auf das Halteteil 3 die in Schieberichtung weisende Vorderkante des Gleitelementes 24 das Druckelement 30 komprimiert und bei Erreichen der vordefinierten Verriegelungsposition, bei der die Mittelachsen der beiden Bohrungen 29 und 32 fluchten, so expandiert, daß der Vorsprung 31 in die Bohrung 32 eingreift.

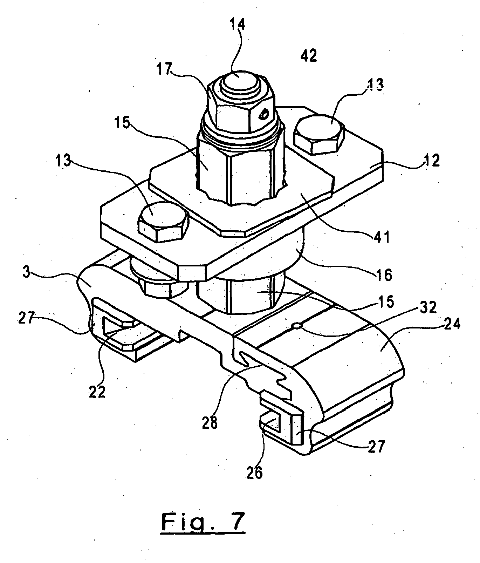

Fig. 7 zeigt eine perspektivische Ansicht der Höhenverstelleinrichtung mit dem Halteteil 3 und dem in der korrekten Endlage montierten Gleitelement 24. Abweichend zum Ausführungsbeispiel der Fig. 2 ist hier das Federpaket (19 der Fig. 2) fortgelassen. Zusätzlich ist noch eine Sicherungsscheibe 41 zu erkennen, die über die erste Hülse 15 aufgeschoben ist und an deren Sechskantkopf angepaßt ist. Die Sicherungsscheibe 41 wird durch die beiden Schrauben 13 gegen ein Verdrehen gesichert und sichert damit die Drehposition der ersten Hülse 15. Weiter ist noch ein Sicherungsstift 42 an der Mutter 17 zu sehen, der durch die Mutter und eine Bohrung des Dornes 14 hindurchgeht und ein relatives Verdrehen dieser beiden Teile unterbindet. In entsprechender Weise kann auch an der unteren Mutter 18 und dem bis dahin reichenden Dorn 14 ein entsprechender Sicherungsstift vorgesehen sein.

## Patentansprüche

1. Stromschienenanordnung zur Speisung von elektrischen Triebfahrzeugen, mit einer starren Stromschiene (2), die durch ein Halteteil (3) an einem Tragwerk befestigbar ist, wobei das Halteteil (3) formschlüssig mit einem Gleitelement (24) koppelbar ist, das in Längsrichtung der Stromschiene (2) verschieblich ist und die Stromschiene (2) in Ausnehmungen (22, 25) des Halteteils (3) und des Gleitelementes (24) gehalten ist,
**dadurch gekennzeichnet,**
**dass** ein federelastisches Druckelement (30) in Bohrungen (29, 32) des Halteteils (3) und des Gleitelementes (24) eingreift und damit eine vordefinierte Position zwischen dem Halteteil (3) und dem Gleitelement (24) fixiert.

2. Stromschienanordnung nach Anspruch 1, **dadurch gekennzeichnet,**
**dass** das Druckelement (30) in die Bohrung (29) des Halteteils (3) eingesetzt ist und mit einem Vorsprung (31) in die Bohrung des Gleitelementes (24) eingreift.

3. Stromschienenanordnung nach Anspruch 2, **dadurch gekennzeichnet,**
**dass** die Bohrung des Halteteils (3) eine Sacklochbohrung (29) ist

4. Stromschienenanordnung nach Anspruch 2 oder 3, **dadurch gekennzeichnet,**
**dass** der Vorsprung (31) des Druckelementes (30) die Form einer Kugelkalotte aufweist.

5. Stromschienenanordnung nach Anspruch 1, **dadurch gekennzeichnet,**
**dass** das Halteteil (3) und das Gleitelement (24) durch eine Schwalbenschwanzführung (28) miteinander verbunden sind.

6. Stromschienenanordnung nach einem der Ansprüche 1 bis 5, **dadurch gekennzeichnet,**
**dass** an einer Seite des Halterteils (3) ein schwalbenschwanzförmiger Vorsprung (36) angebracht ist und dass das Gleitelement (24) eine daran angepasste schwalbenschwanzförmige Ausnehmung (39) aufweist.

7. Stromschienanordnung nach Anspruch 6, **dadurch gekennzeichnet,**
**dass** die Sacklochbohrung (29) im Bereich des schwalbenschwanzförmigen Vorsprunges und die Bohrung (32) des Gleitelementes (24) im Bereich der schwalbenschwanzförmigen Ausnehmung (39) angeordnet sind.

8. Stromschienenanordnung nach einem der Ansprüche 1 bis 7, **dadurch gekennzeichnet,**
**dass** das Halteelement (3) an seiner der Ausnehmung (22) abgewandten Seite eine Abschrägung (38) aufweist, die mit einem abgeschrägten Vorsprung (40) des Gleitelementes (24) in Berührung ist.

## Claims

1. A power rail arrangement for the power supply of electric traction vehicles, comprising a rigid power rail (2), which can be fastened to a supporting unit by means of a retaining part (3), wherein the retaining part (3) can be coupled to a sliding element (24) in a positive-locking manner, which can be moved in longitudinal direction of the power rail (2), and wherein the power rail (2) is retained in openings (22, 25) of the retaining part (3) and of the sliding element (24),
**characterized in that** an elastic compression element (30) engages into bores (29, 32) of the retaining part (3) and of the sliding element (24), thus fixing a redefined position between the retaining part (3) and the sliding element (24).

2. The power rail arrangement according to claim 1, **characterized in that** the compression element (30) is inserted into the bore (29) of the retaining part (3) and engages into the bore of the sliding element (24) by means of a projection (31),

3. The power rail arrangement according to claim 2, **characterized in that** the bore of the retaining part (3) is a blind bore (29).

4. The power rail arrangement according to claim 2 or 3, **characterized in that** the projection (31) of the compression element (30) has the shape of a spherical cap.

5. The power rail arrangement according to claim 1 , **characterized in that** the retaining part (3) and the sliding element (24) are connected with each other by a dovetail-shaped guide (28).

6. The power rail arrangement according to one of claims 1 to 5, **characterized in that** on one side of the retaining part (3) a dovetail-shaped projection is attached and **in that** sliding element (24) comprises a dovetail-shaped opening (39) adapted thereto.

7. The power rail arrangement according to claim 6, **characterized in that** the blind bore (29) is arranged in the area of the dovetail-shaped projection and the bore (32) of the sliding element (24) is arranged in the area of the dovetail-shaped opening (39).

8. The power rail arrangement according to any one of claims 1 to 7, **characterized in that** the retaining part (3), on its side facing away from the opening (22), comprises a chamfer (38) which is in contact with a chamfered projection (40) of the sliding element (24).

## Revendications

1. Ensemble à rail conducteur pour l'alimentation de véhicules de traction électriques, comprenant un rail conducteur (2) rigide, qui peut être fixé à une structure porteuse par une pièce de retenue (3), dans lequel la pièce de retenue (3) peut être couplée, par complémentarité de forme, à un élément coulissant (24), qui peut être déplacé par coulissement dans la direction longitudinale du rail conducteur (2), et dans lequel le rail conducteur (2) est maintenu dans des évidements (22, 25) de la pièce de retenue (3) et de l'élément coulissant (24),
**caractérisé en ce**
**qu'**un élément de pression (30) élastique vient en prise avec des alésages (29, 32) de la pièce de retenue (3) et de l'élément coulissant (24) et fixe ainsi une position prédéfinie entre la pièce de retenue (3) et l'élément coulissant (24).

2. Ensemble à rail conducteur selon la revendication 1, **caractérisé en ce**
**que** l'élément de pression (30) est inséré dans l'alésage (29) de la pièce de retenue (3) et vient en prise, par une partie faisant saillie (31), avec l'alésage de l'élément coulissant (24).

3. Ensemble à rail conducteur selon la revendication 2, **caractérisé en ce**
**que** l'alésage de pièce de retenue (3)) est un alésage borgne (29).

4. Ensemble à rail conducteur selon la revendication 2 ou 3,
**caractérisé en ce**
**que** la partie faisant saillie (31) de l'élément de pression (30) présente la forme d'une calotte sphérique.

5. Ensemble à rail conducteur selon la revendication 1, **caractérisé en ce**
**que** la pièce de retenue (3) et l'élément coulissant (24) sont reliés entre eux par un système de guidage en queue d'aronde (28).

6. Ensemble à rail conducteur selon l'une des revendications 1 à 5, **caractérisé en ce**
**qu'**une partie saillante (36) en forme de queue d'aronde est réalisée sur un côté de la pièce de retenue (3), et en ce que l'élément coulissant (24) présente un évidement (39) en forme de queue d'aronde adapté à ladite partie saillante.

7. Ensemble à rail conducteur selon la revendication 6, **caractérisé en ce**
**que** l'alésage borgne (29) est disposé dans la zone de la partie saillante en forme de queue d'aronde et que l'alésage (32) de l'élément coulissant (24) est disposé dans la zone de l'évidement (39) en forme de queue d'aronde.

8. Ensemble à rail conducteur selon l'une des revendications 1 à 7, **caractérisé en ce**
**que** l'élément de retenue (3) présente, au niveau de son côté opposé à l'évidement (22), un chanfrein (38), qui est en contact avec une partie faisant saillie (40) chanfreinée de l'élément coulissant (24).
